# EUROPEAN PATENT APPLICATION

(11) **EP 3 142 028 A2**
(43) Date of publication of application: **15.03.2017**
(21) Application number: 16188178.4
(22) Date of filing: 09.09.2016
(51) Int. Cl.: G06F 17/30

(54) **HANDLING FAILURES IN PROCESSING NATURAL LANGUAGE QUERIES THROUGH USER INTERACTIONS**

(30) Priority: 11.09.2015 US 201562217260 P
(71) Applicant: Google Inc., Mountain View, CA 94043 (US)
(72) Inventor: Tolga, Bozkaya, Mountain View, CA 94043 (US); Dijamco, Armand Joseph, Mountain View, CA 94043 (US); Bui, Tran, Mountain View, CA 94043 (US); Yu, Andy Chu-I, Mountain View, CA 94043 (US)
(74) Representative: Fraser, Karen

(57) **Abstract**

Systems, methods, and computer storage media for handling failures in generating structured queries from natural language queries. One of the methods includes obtaining, through a natural language front end, a natural language query from a user; converting the natural language query into structured operations to be performed on structured application programming interfaces (APIs) of a knowledge base, comprising: parsing the natural language query, analyzing the parsed query to determine dependencies, performing lexical resolution, forming a concept tree based on the dependencies and lexical resolution; analyzing the concept tree to generate a hypergraph, generate virtual query based on the hypergraph, and processing the virtual query to generate one or more structured operations; performing the one or more structured operations on the structured APIs of the knowledge base; and returning search results matching the natural language query to the user.

## Description

### CLAIM PRIORITY

This application claims the benefit under 35 U.S.C. § 119(e) of the filing date of U.S. Provisional Patent Application Serial No. 62/217,260, for "Handling Failures in Processing Natural Language Queries Through User Interactions," which was filed on September 11, 2015, and which is incorporated here by reference.

### BACKGROUND

This specification relates to handling failures in processing natural language queries.

Failures may occur, when a computer system attempts to process natural language queries provided by users to provide matching search results. An iterative model may be used to handle these failures.

Implementing an iterative model in this context, however, may be prohibitive, e.g., a complete set of definitions of terms that may be used in a user-provided natural language query is often needed.

### SUMMARY

This specification describes techniques for handling failures in generating SQL queries from natural language queries.

In general, one innovative aspect of the subject matter described in this specification can be embodied in methods that include the actions of obtaining, through a natural language front end, a natural language query from a user; converting the natural language query into structured operations to be performed on structured application programming interfaces (APIs) of a knowledge base, comprising: parsing the natural language query, analyzing the parsed query to determine dependencies, performing lexical resolution, forming a concept tree based on the dependencies and lexical resolution; analyzing the concept tree to generate a hypergraph, generate virtual query based on the hypergraph, and processing the virtual query to generate one or more structured operations; performing the one or more structured operations on the structured APIs of the knowledge base; and returning search results matching the natural language query to the user. Other embodiments of this aspect include corresponding computer systems, apparatus, and computer programs recorded on one or more computer storage devices, each configured to perform the actions of the methods. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

The foregoing and other embodiments can each optionally include one or more of the following features, alone or in combination. In particular, one embodiment includes all the following features in combination. Parsing the natural language query includes breaking the natural language query into phrases and placing the phrases in a parsing tree as nodes. Performing lexical resolution includes generating concepts for one or more of the parsed phrases. Analyzing the concept tree includes: analyzing concepts and parent-child or sibling relationships in the concept tree; and transforming the concept tree including annotating concepts with new information, moving concepts, deleting concepts, or merging concepts with other concepts. The hypergraph represents a database schema where data tables may have multiple join mappings among themselves. The method further includes analyzing the hypergraph including performing path resolution for joins using the concept tree. The method further includes detecting a failure during conversion of the natural language query to the one or more structured operations. The method further includes resolving the failure through additional processing including determining if an alternative parse for the natural language query is available. The method further includes resolving the failure through additional processing including: providing, through a user interaction interface, to the user one or more information items identifying the failure; responsive to a user interaction with an information item: and modifying the natural language query in accordance with the user interaction to generate one or more structured operations. The failure can be based on one or more of a bad parse, an ambiguous column reference, an ambiguous constant, an ambiguous datetime, unused comparison keywords or negation keywords, aggregation errors, a missing join step, an unprocessed concept, an unmatched noun phrase, or missing data access. The knowledge base, the natural language front end, and the user interaction interface are implemented on one or more computers and one or more storage devices storing instructions, and wherein the knowledge base stores information associated with entities according to a data schema and has the APIs for programs to query the knowledge base.

The subject matter described in this specification can be implemented in particular embodiments so as to realize one or more of the following advantages. Efforts for handling failures in processing natural language queries can be reduced. Natural language terms can be matched to lexicons recognized by a natural language processing system through user interactions, reducing the need for complete definitions of query terms upfront that may appear in a natural language query. Also, linguistic ambiguities detected in a user-provided natural language query can be resolved as they arise, eliminating the need to produce search results based on each alternative interpretation. Further, data access issues can be brought to a user's attention early on without risking any data security breach.

User interactions can be minimized in generating structured queries from natural language queries. In particular, the system uses techniques to avoid unnecessary iterations through user actions by assessing a quality of the parse and the structured query that can be generated through identification of certain errors or warnings during parsing and processing of the input query expressed in natural language. This assessment allows the system to perform operations to provide a translation of the natural langue query to a structured query while overcoming some shortcomings of the parser or some grammatical/structural mistakes in the natural language query. Consequently, the system can often determine what the structured query from compact sentences or even phrases. This improves the user experience and makes translating natural language queries into structured queries more useful.

In some situations, the system cannot determine the structured query without user interaction. In those cases, the system attempts to guide the user towards corrections that can resolve the errors and lead to a successful translation into a structured query. For example, if there is ambiguity, the system can identify and present possible interpretations and choices for disambiguation. This helps the user quickly correct the natural language query and improves the speed of generating the structured query in those cases.

The system allows users who are not experienced with the particular data domain or query languages to obtain specifically desired information using natural language queries. The system accepts queries presented in plain English (or language of the user's choice) and processes it through the use of NLP (natural language processing) techniques to generate and run the corresponding structured query in the query backend and return the result to the user. To process the natural language query, a number of schema lexicons are generated which provide a number of mappings used to process the natural language query.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a flow diagram of an example process of converting a natural language query into a structured query.
FIG. 2 is a block diagram illustrating an example system for handling failures in processing natural language queries through user interactions.
FIG. 3 is a flow diagram illustrating an example process for iterating over query versions.
FIGS. 4-7 are diagrams of example concept trees.
FIG. 8 is a block diagram illustrating an example process for handling a missing token failure through user interactions.
FIG. 9 is a block diagram illustrating an example process for handling a lexicon matching failure through user interactions.
FIG. 10 is a block diagram illustrating an example process for handling a data access failure through user interactions.
FIG. 11 is a block diagram illustrating an example process for handling a linguistic ambiguity failure through user interactions.
FIG. 12 is a flow diagram illustrating an example process for handling failures in processing natural language queries through user interactions.

Like reference numbers and designations in the various drawings indicate like elements.

### DETAILED DESCRIPTION

### Overview

Users can provide queries using natural language, for example, a free form English text string. A system can convert the received natural language queries into structured queries, for example, structured query language ("SQL") queries. The structured queries can be executed and responsive data can be returned for output. For example, in response to a query the converted structured query can be used to obtain data responsive to the query, which can then be returned to the user.

The system may not always be able to successfully convert a given natural language query into a structured query. In particular, the natural language query can include errors made by the user including typos, malformed sentences, or missing keywords. The system also may be unable to convert the natural language query due to limitations of the system in recognizing particular sentence formations.

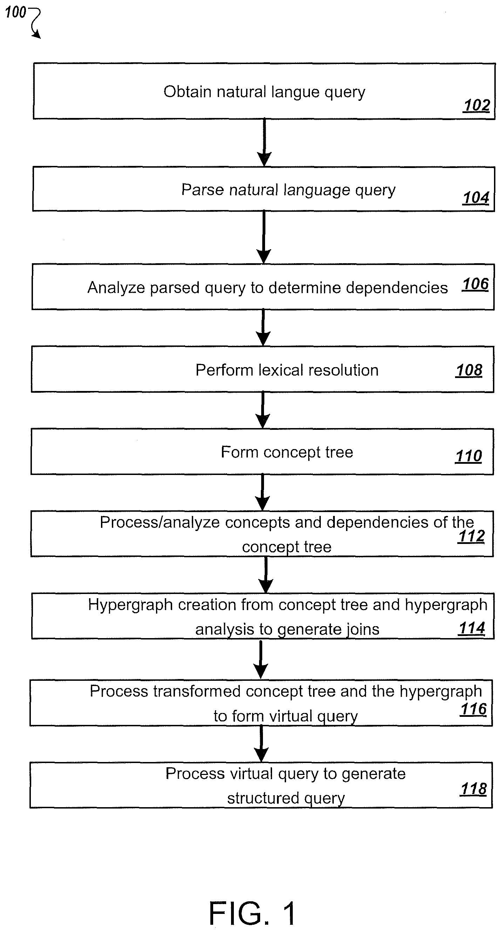

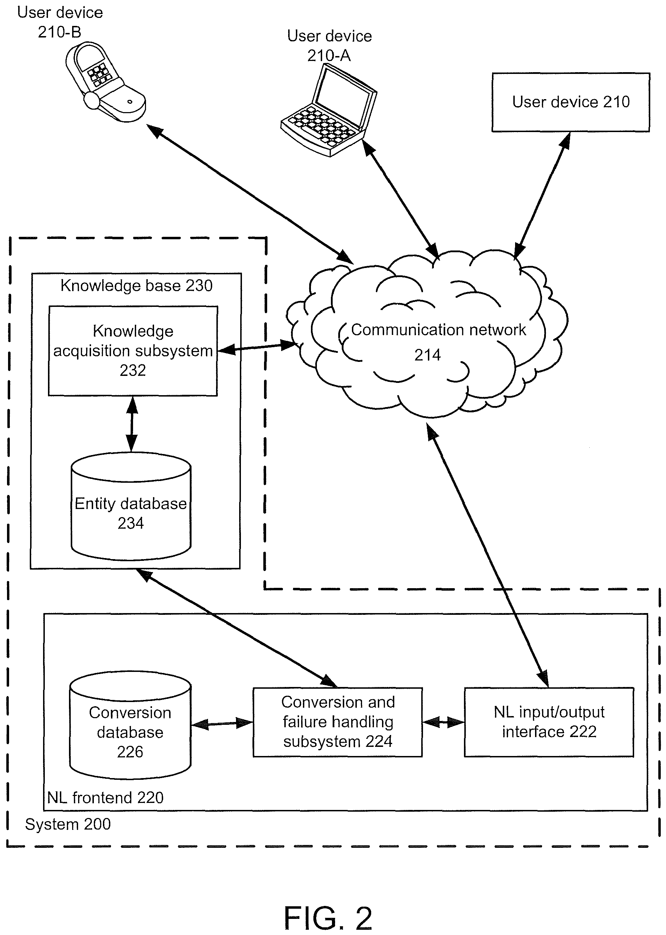

A process of converting a natural language query into a structured query can undergo a number of stages. FIG. 1 is a flow diagram of an example process 100 of converting a natural language query into a structured query. For convenience the process is described with respect to a system that performs the process, for example, the system described below with respect to FIG. 2.

The system obtains 102 a natural language query. The system can receive a query input by a user through a user interface. For example, the user interface can be a search interface through which a user can submit natural language search queries. Details of individual process steps are described in greater detail below with respect to FIGS. 2-7.

The system parses 104 the obtained natural language query. The parser can be used to parse a natural language query into tokens, for example, parsing the query "Where can I get bacon and egg sandwich?" into the following tokens: "Where," "I," "get," "bacon and egg," and "sandwich." Two types of parsers can be used: a dependency parser and a constituency parser. Another example query can be "computer sales per sale country and production country for goods manufactured in ASIA and sold in EMEA." This query can be parsed into tokens "sales," "per," "sale country," "production country," "manufactured," "ASIA," "sold," and "EMEA."

A constituency parser breaks a natural language query into phrases and places these phrases in a parsing tree as nodes. The non-terminal nodes in a parsing tree are types of phrases, e.g., Noun Phrase or Verb Phrase; the terminal nodes are the phrases themselves, and the edges are unlabeled.

A dependency parser breaks words in a natural language query according to the relationships between these words. Each node in a parsing tree represents a word, child nodes are words that are dependent on the parent, and edges are labeled by the relationship.

The system analyzes 106 the parsed query to determine dependencies between constituents. The dependency analysis allows the system to identify modifier relationships between the parsed phrases. Additionally, the system performs 108 lexical resolution to identify matching n-grams and generates concepts for the matched n-grams. A concept created for a phrase, e.g., an n-gram, captures what the phrase means to some group of people. This meaning can be identified through the use of one or more lexicons. For example, in the above example, the phrase "sales" can be recognized as an n-gram mapping to a "sales_cost_usd" column in a table for a particular schema lexicon. Consequently, an attribute concept is generated as corresponding to the phrase "sales" in the parsed query. Other information may be known from the lexicon, for example, that the phrase is associated with a numeric and aggregatable column. This information can be used when eventually generating corresponding structured queries.

A number of different types of concepts can be created based on phrases that are recognized including, for example, attributes, date/time_window expressions, parts of speech (e.g., per, by, for, in, or not), numeric/string constants, recognized constants, subcontexts, and aggregations. Recognized constants can be recognized for example through an inverted index or through common items

The system forms 110 a concept tree from the generated concepts and dependencies between n-grams. The initial concept tree that is created from the concepts corresponding to the parsed phrases and the identified dependency relationships. The concepts are represented by nodes in the concept tree. However, the initial concept tree does not include information that can be inferred from parent-child relationships of the concept tree itself. Thus, the initial concept tree represents an intermediate structure used by the system to generate structured queries after performing additional analysis, simplifications, and transformations over the concept tree. The analysis and transformations allow the system to identify meaningful and unambiguous mappings between entities represented in the concept tree to attributes, joins, aggregations, and/or predicates that can be used to form structured queries that accurately represent the intent of the user submitting the query.

The system processes 112 the concepts and dependencies of the concept tree to transform the concept tree. In particular, the concepts and the parent-child or sibling relationships in the concept tree are analyzed. The transformations are based on a system of inference rules based on the semantic representation provided by the concept tree that allows the system to de-tangle syntactic ambiguities. The concepts that are transformed may be annotated with new information, they may be moved around, deleted, or merged with other concepts. The remaining concepts after the processing form a transformed concept tree. The transformed concept tree deterministically map to query operations/components to facilitate translation into a structured query by simply processing them one by one to build up the query components.

The system creates 114 a hypergraph from the concept tree and analyses the hypergraph to generate joins. A hypergraph represents a database schema where data tables may have multiple join mappings among themselves. The hypergraph can include a set of nodes representing columns of data tables stored in a database, as well as a set of edges representing tables to which the columns belong. Two nodes are connected by an edge if the columns represented by the two nodes are joinable; and the edge identifies the tables to which the columns belong. The hypergraph analysis includes path resolution for joins using the concept tree.

Once the concept tree is transformed and the hypergraph analysis is complete, the system processes 116 the concept tree and the hypergraph to generate the building blocks of an output query into what will be referred to as a virtual query. The virtual query is a representation of the query components including, for example, selected attributes, grouped attributes, aggregations, filters, and joins. These components are created from the nodes of the transformed concept tree, in other words, concepts that are processed merged or annotated, except for the join specifications, which come from the hypergraph analysis.

The system processes 118 the virtual query to generate a structured query. The virtual query can be translated into a structured query by processing the query components represented by the virtual query. The translation can be customized to generate structured queries in different dialects depending on the type of query evaluation engine being used. Additionally, the virtual query can be translated into different query languages, e.g., corresponding to the language of the received query.

A failure can occur at different stages of the conversion. The present specification describes techniques for identifying the failure and acting on the failure. The action can include resolving the failure through additional processing. In particular, the action can be taken at the corresponding stage of the conversion. For example, if there is a failure at the parsing of the natural language query, the system can request an alternative parse. In some implementations, the action is propagated all the way to the user. For example, the user can be prompted to clarify a portion of the input query, e.g., to clarify a binding of a constant value.

### System Architecture

FIG. 2 is a block diagram illustrating an example system 200 for handling failures in processing natural language queries through user interactions.

The system 200 includes a natural language (NL) front end 220 and a knowledge base 230.

The system 200 receives natural language queries originating from one or more user devices 210, e.g., a smart phone 210-B and a laptop 210-A, and converts them into structured operations, e.g., programming statements, to be performed on application programming interfaces (APIs) of the knowledge base 230.

When the system 200 detects a predefined type of conversion failure, the system 200 can cause a prompt to be presented to a user requesting the user to provide input to correct the failure. Note that not all conversion failures require user input or interaction; rather, only some types of failures, e.g., data access issues or selected linguistic ambiguities, require user input. The system is configured to handle most issues without user interaction using one or more techniques for handling failures as described in this specification.

The knowledge base 230 includes a knowledge acquisition subsystem 232 and an entity database 234. The knowledge base 230 provides structured APIs for use by programs to query and update the entity database 234.

The knowledge acquisition subsystem 232 obtains, from external sources, e.g., the Internet, additional entity information and stores it in association with existing entity information in the entity database 234 and according to the data schema of the knowledge base. The knowledge acquisition subsystem may communicate directly with external sources, bypassing the NL frontend 220.

The entity database 234 stores entity information, i.e., information about entities, e.g., dates of birth of people, addresses for businesses, and relationships between multiple organizations. The entity information is stored in the entity database 234 according to a data schema. In some implementations, the entity database 234 stores entity information using a table structure. In other implementations, the entity database 234 stores entity information in a graph structure.

A data schema is generally expressed using a formal language supported by a database management system (DBMS) of the entity database. A data schema specifies the organization of entity information as it is logically constructed in the entity database, e.g., dividing entity information into database tables when the entity database is a relational database.

A data schema can include data representing integrity constraints specific to an application, e.g., which columns in a table the application can access and how input parameters should be organized to query a certain table. In a relational database, a data schema may define, for example, tables, fields, relationships, views, indexes, packages, procedures, functions, queues, triggers, types, sequences, materialized views, synonyms, database links, directories, XML schemas, and other elements.

The NL frontend 220, which can be implemented on one or more computers located at one or more locations, includes an NL input/output interface 222, a conversion and failure handling subsystem 224, and a conversion database 226. The NL input/output interface 222 receives, from users, natural language queries and, when the system 200 finishes processing these queries, provides matching search results back to the users, generally through a network connection to a user device.

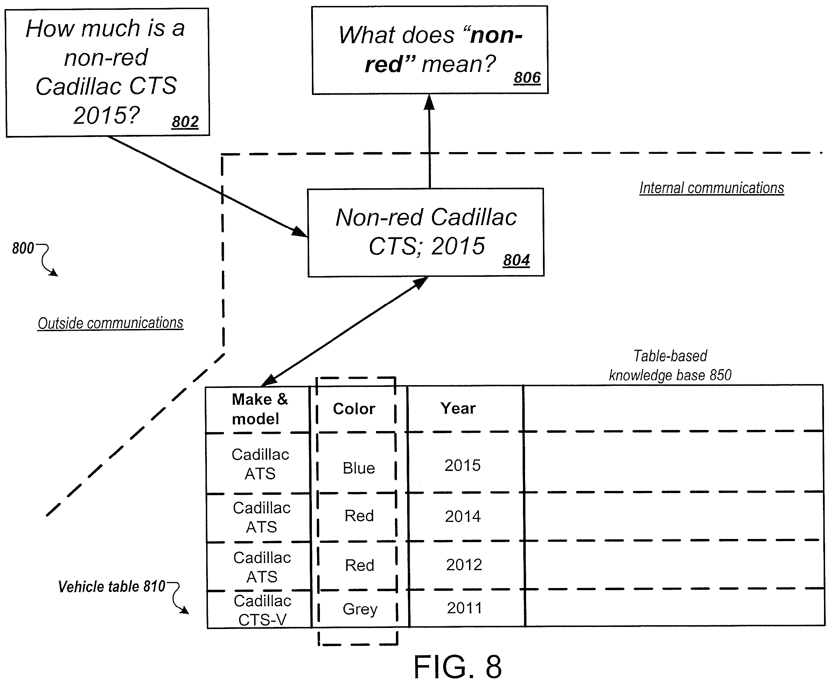

The conversion database 226 stores rules for generating structured operations to be performed on APIs of the knowledge base 230 based on natural language queries. For example, based on (1) the configuration that the knowledge base stores entity information using data tables and (2) the names of these tables specified in an application schema, which is explained in greater detail with reference to FIG. 8, a conversion rule may specify that a natural language query, "How much is a non-red Cadillac CTS 2015?" should be converted to a structured query language (SQL) statement "Select MSRP From Table vehicle Where make_and_model = 'Cadillac CTS' and color = 'Non-red.'"

Conversion rules stored in the conversion database 226 may be specific to the data schema used by the underlying knowledge base. For example, if the underlying knowledge base stores entity information as a graph structure that uses nodes to represent entities and edges to represent relationships between the entities, the conversion rules may specify how a natural language query or update statement is to be parsed to generate statements, e.g.., input parameter, operands between these input parameters, and output parameters, for querying the graph structure.

For example, after receiving the natural language query "Who is the first president of the United States?" the system may use conversion rules to generate the following statements: 1. find a node connected with the Node "US president" by a "1st" edge; and 2. retrieve the node's name "George Washington."

The conversion and failure handling subsystem 224 converts natural language queries received from users into structured operations to be performed on APIs of the knowledge base 230. The subsystem 224 performs these conversions based on conversion rules specified in the conversion database 226.

During a conversion process, when a failure occurs, the subsystem 224 can resolve the failure or can present information about the failure to a user and interact with the user to resolve the failure. Different types of failures may occur, because processing a natural language query includes several stages, e.g., parsing, tokenization, dependency analysis, concept tree analysis, and SQL query generation, and failures may occur at any one of these stages.

### Iterating over query versions

When a failure occurs, alternative parses can be generated and scored. A winning alternative parse, e.g., one with a highest score, can be used to generate the structured query.

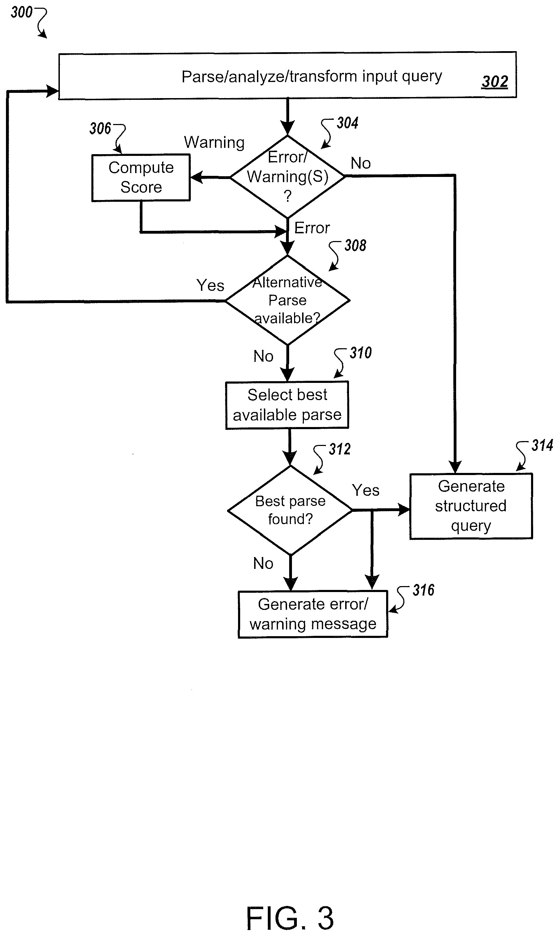

FIG. 3 is a flow diagram illustrating an example process 300 for iterating over query versions. For convenience the process 300 is described with respect to a system that performs the process 300, for example, the system described with respect to FIG. 2.

The system parses the natural language query 302. Initially, the natural language query can correspond with an obtained user input query. The natural language query can be obtained and parsed, for example, as described above with respect to FIG. 1.

The system determines 304, based on analysis of the parsed query, whether the parsed query triggers an error or a warnings. A warning can be used as a quality measure that indicates the parsed query is not as expected but can still be processed. An error is a failure that indicates that something is wrong with the parsed query and the conversion process to a structured query cannot proceed. More than one warning can be triggered during analysis of the parsed query depending on the stage of the analysis.

In response to a determination that a warning is triggered by the parsed query, warning branch, the system computes 306 a quality score. The quality score can be stored along with state information, e.g., the parse result, and warning information, e.g., information on the cause, location, and relevant query tokens. After computing the quality score, the system determines 308 whether there is an alternative parse. The quality score can depend on the number of warnings triggered during the analysis of the parsed query.

In response to a determination that an error is triggered by the parsed query, error branch, the system determines 308 whether there is an alternative parse. Additionally, the system logs the error and state information. The state information can include the cause, location, and relevant tokens associated with the error.

In response to a determination that there is an alternative parse, yes branch, the system iterates from step 302. Thus, multiple alternative parses can be analyzed if subsequent warnings or errors are triggered.

In response to a determination that there is no alternative parse available, the system selects a best available parse 310.

If one or more of the iterations resulted in warnings, the quality scores for the parses are compared. For example, the parse with the highest quality score can be selected.

After selecting the best available parse, the system determines whether this parse is a best parse. A best parse is a parse that may have warnings, but does not have any errors. If such a best parse if found, the system generates 314 a structured query. The analysis of the parsed query, or parsed alternative queries, includes the generation of a transformed concept tree, which can then be used to generate the structured query.

If a best parse is not found, for example, if the best available parse still has an error, the system generates 316 an error message. If each iteration resulted in an error being triggered, the system cannot continue. A particular error message can be presented to the user. In some implementations, the user can be prompted to take action to correct the input query. Additionally, even when a best parse is found, if there are generated warnings the system can generate 316 a warning message that can be provided to the user.

Returning to the determining at step 304, in response to a determination that a query or alternative query has no error or warning triggered, the system generates 314 the structured query.

### Recording and propagation of failures

During the conversion of a natural language query, an error can be determined that results in a failure or a warning can be triggered resulting in a quality score that indicates a lower confidence. A number of different types of errors can be determined.

### Bad Parse:

The system can determine that a bad parse exists, for example, when the system is not able to generate a concept tree from the parsed query. In response to a bad parse, the system determines whether an alternative parse exists. If no alternative parse exists, a failure can occur. If an alternative parse does exits, the analysis is performed using the alternative parse.

### Ambiguous Column Reference:

An ambiguous column reference error can occur in several different stages of the conversion process. As described above with respect to FIG. 1, the system matches the constituents identified by the parsing to particular n-grams. However, there may be multiple matches possible, e.g., there may be multiple column matches to a particular n-gram. Instead of recording the error at this stage, the system can record all possible matches and determine if further analysis in the concept tree transformation stage, described in FIG. 1, resolves the ambiguity. Furthermore, during hypergraph analysis the system can determine that there are no subcontexts available to disambiguate which join path is the one to use for a column.

In response to the error, the system can prompt the user to specify a particular subcontext to resolve the ambiguity. Alternatively, the ambiguity may be due to a bad parse. The system can attempt alternate parses to resolve the ambiguity before prompting the user.

For example, the input query can be "countries where sales is more than 1000." This query can generate the following error message, which can be provided to the user: We found an ambiguous column reference in the query for the phrase "country". We were not able to disambiguate the column as it had multiple matches:

| Table | Column | Possible Phrase |
|---|---|---|
| FactoryToConsumer | Manufacture_country_code | Production |
| FactoryToConsumer | Package_country_code | Package |
| FactoryToConsumer | Sale_country_code | Sold |

The modified query: "Production countries where sales is more than 1000" can result in the following structured query:

```
 SELECT
        manufacture_country_code,
        SUM(sales_usd) AS alias0_sales_usd
 FROM FactoryToConsumer
 GROUP BY 1
 HAVING alias0_sales_usd > 1000;
```

### Ambiguous Constant:

Analysis of the parsed query, particularly during concept tree analysis described above with respect to FIG. 1, can result in a malformed concept tree that prevents the system from identifying what a specified constant value references or that an identified column has an incompatible type with the constant.

In response to the identified error, the system can determine whether alternative parses resolve the problem as a way to ensure the problem is not a bad parse. If the alternative parses do not resolve the ambiguity, the error can be propagated to the user as a message identifying the particular constant phrase and requesting clarification.

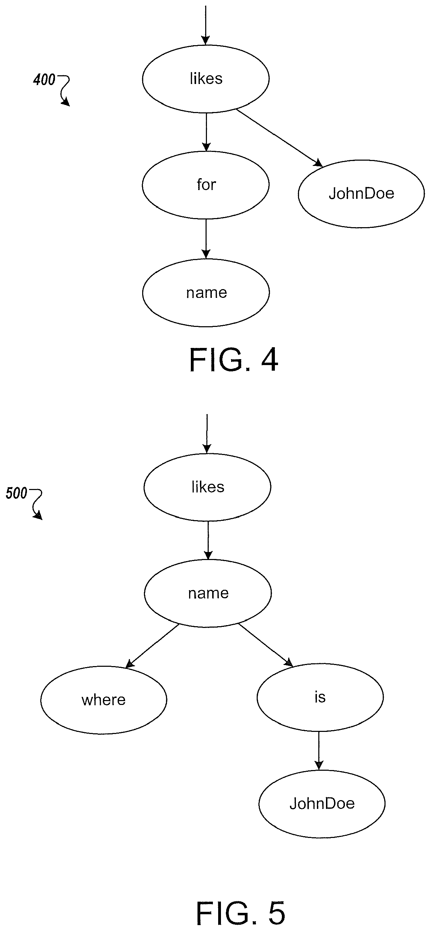

For example, the input query can be "likes for name 'JohnDoe"'. The parse for this query leads to a concept tree where the dependency relationship between the constant string 'JohnDoe' and the attribute name was not properly captured. An example of this concept tree is shown in FIG. 4. In the example concept tree 400 shown in FIG. 4, the concept "JohnDoe" is not shown as dependent on the concept "name." However, a different query version e.g., "likes where name is 'JohnDoe "' is parsed properly and results in the concept tree 500 shown in FIG. 5. In concept tree 500, the dependency of "JohnDoe" on "name" is correctly defined. This results in a conversion to the following structured query:

```
 SELECT
        likes
 FROM buyer_seller.Person
 WHERE full_name = 'JohnDoe';
```

### Ambiguous Datetime:

Some datetime representations look very much like integer numbers, for example, 2015 is both a number and a datetime constant. The parsing may not be able to disambiguate between the number and the datetime constant. Therefore, the system uses context of the phrase to determine whether it is actually a datetime or a numeric constant. This can be performed during the concept tree analysis stage. If the system is unable to disambiguate an error is generated.

In response to the error, the system checks for alternative parses to confirm that the ambiguity error is not caused by the parse. If alternative parses do not resolve the ambiguity, a message can be provided to the user pointing out the particular datetime/numeric expression and request clarification.

For example, the query that can result in an error requiring user input to resolve is: "Total revenue in 2015."

### Unused Comparison Keywords or Negation Keywords:

Negation and comparison keywords are important for generating predicates correctly. The keywords are processed during the concept tree analysis stage. The system generates warnings when the system is not able to process them properly. Not processing properly basically means that the keyword concept was not used to set or modify a relation.

The warnings are most likely caused by either a bad parse or a malformed sentence. The system attempts alternate parses first to see if there is an alternative version that allows the system to process the keywords properly. Since the errors are warnings and not failures, the system may generate a structure query anyway assuming there are no other errors. However, the system can still notify the user with a message indicating that the system was unable to process the keyword.

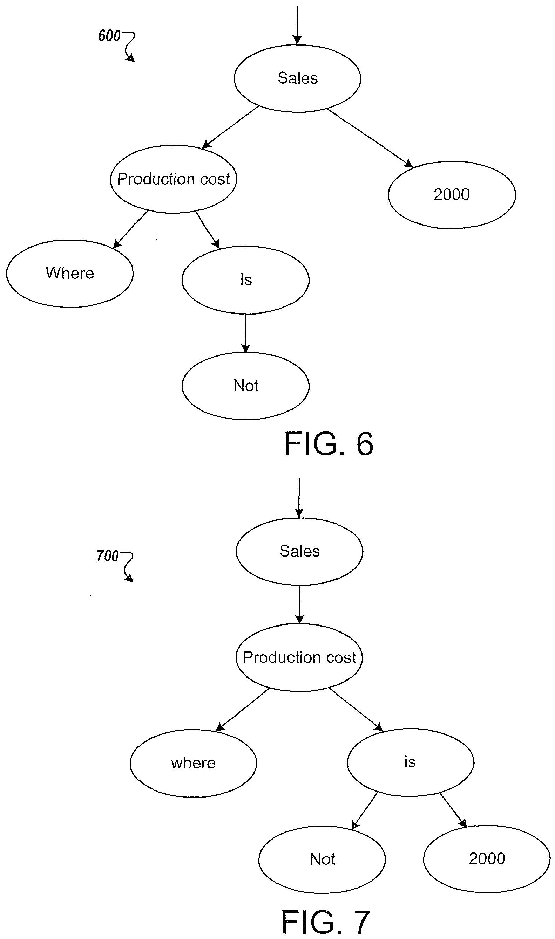

For example, the input query can be "sales where production cost is not 2000." The parse result concept tree for the input query is illustrated in FIG. 6. In the concept tree 600 shown in FIG. 6 the negation concept, "not," is not located correctly. Consequently, a warning can be generated for the parse indicating that the system was unable to interpret the negation keyword "not" in the input query. If there are no alternative parses that do not generate a warning, the structured query generated from the input query can be:

```
 SELECT
        SUM(production_cost) AS alias0_production_cost,
        SUM(sales_usd) AS alias1_sales_usd
 FROM geo.FactoryToConsumer
 HAVING alias0_production_cost = 2000
```

If there is an alternative parse that resolves the issues, an example resulting concept tree is shown in FIG. 7. In the concept tree 700 shown in FIG. 7 correctly positions the negation concept. As a result, the structured query generated can be:

```
 SELECT
        SUM(production_cost) AS alias0_production_cost,
        SUM(sales_usd) AS alias1_sales_usd
 FROM geo.FactoryToConsumer
 HAVING alias0_production_cost != 2000;
```

### Aggregation Errors:

There are different types of aggregation errors that can occur during analysis of the input query, in particular, during concept tree analysis. One type of aggregation error occurs when an aggregation function is not applied. This can occur when the system is unable to associate an aggregation function with an attribute or structured query expression.

For example, an input query "average where production country is France" can result in an error message being generated indicating that the system was unable to associate an aggregate function, specifically [average] in the input query with the column to which it has to be applied. A corrected query "average sales where production country is France," can be used to generate the structured query:

```
 SELECT
        AVG(sales_usd) AS alias0_sales_usd
 FROM geo.FactoryToConsumer
 WHERE manufacture_country_code = 'FR';
```

A second type of aggregation error that can occur during concept tree analysis is an aggregation function over non-compatible type. This aggregation error occurs when the query indicates that an aggregation is specified over an attribute that is not type compatible, for example, averaging a string attribute.

A third type of aggregation error can occur when a distinct keyword is recognized but was not properly associated with a compatible aggregate argument. For example, the query "number of distinct production countries where sold country is France" generates an error message because the system is not able to interpret the "distinct" keyword in the input query. A corrected query "distinct number of production countries where sold country is France" can be used to generate the structured query:

```
 SELECT
        COUNT(DISTINCT manufacture_country_code)
               AS alias0_manufacture_country_code
 FROM geo.FactoryToConsumer
 WHERE manufacture_country_code = 'FR';
```

A fourth type of aggregation error can occur when one or more aggregate arguments are not specified.

A fifth type of aggregation error can occur when the query specifies an aggregate expression, e.g., a measure, as a grouping key. For example, the query "sum of clicks per sum of impressions" where both "clicks" and "impressions" are numeric measures. The use of "per" in the query indicates the query is malformed. An error message can be generated indicating that the aggregate expression "sum of impressions" was specified as a dimension in the input query.

In each of the aggregation errors, the issue may be caused by either a bad parse or a malformed sentence. The system can attempt alternative parses to see of an alternative parse resolves the error. If an alternative parse does not exist, the error can be presented to the user, for example, with a prompt to correct the input query.

### Missing Join Step:

During hypergraph analysis, the system may determine that it is unable to uniquely identify a column reference. The system may be able to perform a partial matching to join paths to determine which join step is missing.

The system checks for alternative parses to make sure that the error is not caused by the parse. The system may communicate with the user the missing references that are needed, for example, subcontext phrases, with a request that the user identify correct join paths.

For example, the input query can be "sales where buyer's location is in Nevada." The error generated can be a determination by the system of ambiguous reference in the query that indicate a join step is missing. The system can present the user with information indicating where the missing reference lies, e.g., as illustrated in the following table:

| Table | Column | *Possible Phrases* |
|---|---|---|
| buyer_seller.Person | business_address_id | *business address* |
| buyer_seller.Person | personal_address_id | *personal address* |

The example query can also cause an Into message to inform the user that the noun phrase "location" is not recognized.

A correction replacing "location" with "personal address" can result in generation of the following structured query:

```
 SELECT
        SUM(buyer_seller.BuyerSeller.sales_usd) AS
 alias0_sales_usd
 FROM buyer_seller.BuyerSeller.all AS buyer_seller.BuyerSeller
 INNER JOIN buyer_seller.Person
        ON (buyer_seller.BuyerSeller.buyer_id =
 buyer_seller.Person.person_id)
 INNER JOIN buyer_seller.Address
        ON (buyer_seller.Person.personal_address_id =
 buyer_seller.Address.address_id)
 WHERE buyer_seller.Address.state = 'NV';
```

### Unprocessed Concept:

The n-grams generated by the system for concepts for should be processed during the concept tree analysis except for some keywords that the system recognizes that may also serve as parts of speech. For example, if there is a constant literal concept, the system should be able to figure out which column it is relevant to and ultimately generate a predicate from it. If the system ends up with concepts that were not processed, it is an indication that something is missing even if the system is still able to generate a structured query.

If a structured query is generated, the system should return it along with a warning to let the user know that there may be something missing. The message can indicate, e.g., highlight, what may be missing. If a structured query is not generated, the handling may depend on the concept type. At a minimum, an error message can be returned to the user.

### Unmatched Noun Phrases:

The system monitors for noun phrases that are not matched to any lexicons, e.g., attributes, subcontexts, etc., and generates dummy concepts for them to make sure they play their role in forming the concept tree properly. It is highly possible that an unrecognized noun phrase is a misspelled phrase or a partially provided multi-gram.

For example, the system can recognize either "personal address" or "business address" phrases but the user only includes the phrase "address" in the query. The system will generate a corresponding structured query if possible without processing it, but can also propagate a message to the user saying that the phrase "address" is not matched to any phrases that the system recognizes. The message may further note that the phrase may correspond to "personal address" or "business address". Once the user specified which one was intended, the conversion goes through.

In a similar example, the user input query is misspelled and used "personnel address". The system can recognize the similarity and ask the user if s/he meant "personal address" instead.

### Missing Data Access:

During the the lexeme resolver stage, the system can check to see if the user has access to a table (and column) whenever the system creates a concept for it.

Depending on the type of access the user has, the system can show him/her an error message indicating that the user does not have any access to a table, or can show the query only e.g., user has peeker access only, or can show both the query and the result, e.g., if the user has data access. If the user does not have a data access but can see the schemas, the system may treat inverted index hits as constant literals or get explicit verification from the user to treat them as index hits.

### Examples of using user interactions for resolving failures

As described above, different types of failures can be resolved using user interactions. For example, the system may generate a bad parse. If the system is unable to identify one or more alternative parses that are processed successfully, then the user can be prompted with a message that describes the problem. The user can then modify the natural language query and the parsing can be attempted again.

The received natural language query can result in an ambiguous column reference. For example, the query "countries where sales is more than 1000" requires user input to disambiguate. The user can be provided with a list of possible interpretations to aid the user in clarifying the use of "country" in the submitted query. In some implementations, the system provides corresponding subcontext phrases to clarify each possible meaning of 'country.' The user can then add a particular phrase and retry, for example, "production countries where sales is more than 1000."

The received natural language query can result in aggregation errors. For example, the query "number of distinct production countries where sold country is France" results in an error with a message to the user that indicates that the system is unable to associate "distinct" with an expression. The user then has an opportunity to rewrite the query.

The received natural language query can result in a missing join step. For example, the query "sales where buyer's location is in Nevada" does not provide enough information for the system to identify what "Nevada" refers to. From join analysis the system detects that it can reference either one of buyer's business location or buyer's home location. The system provides a display of the possible phrases that the user can use to fix the query.

The above represent only a few examples. Even if the system is able to move forward and generate a structured query, the system can still provide all warnings (with context info) to the user if the best parse has warnings. For example, unused comparison or negation keywords will be highlighted in the natural language query along with the warning message. At that point the user may check the structured query and decide modify the natural language query (possibly using more proper English) to avoid the warnings. Similar with 'unprocessed concept', 'unmatched noun phrase', or 'Ambiguous Datetime' errors.

If the system generates a parse that does not have any warnings or errors, the user receives the translated structured query and the version of the query (if an alternate parse is used) that the system used. Otherwise the user is provided with some sort of guidance through the use of error/warning messages.

FIGS. 8-12 illustrate some example user interactions for resolving failures. One type of failure that may occur when processing a natural language query are missing token failures. Tokenization is the process of breaking up text into units, which are conventionally called tokens. A token can represent one or more words, numbers, or punctuation marks.

FIG. 8 is a block diagram illustrating an example process 800 for handling a missing token failure through user interactions. A missing token failure occurs when a natural language processing system cannot locate words in an original query that correspond to required tokens. For example, because the subject is missing from the natural language query "Where is?" a missing token failure may arise when the system processes this query.

For convenience, the process 800 will be described as being performed by a system of one or more computers, located in one or more locations, and programmed appropriately in accordance with this specification. For example, the system 200 of FIG. 2, appropriately programmed, can perform the process 800.

The process 800 begins with the system obtaining a user-provided natural language query 802, e.g., "How much is a non-red 2015?"

Having received the natural language query 802, the system attempts to convert the natural language query 802 into structured operations, e.g., SQL queries, suitable for operation on a table-based knowledge base 850. In some implementations, one of the conversion steps includes tokenizing the natural language query 802 based on an underlying data schema of the knowledge base 850, e.g., a vehicle table 810.

As shown in FIG. 8, based on a requirement that all SQL queries to the vehicle table 810 must provide a token corresponding to a vehicle's make & model, the natural language processing system breaks the natural language query 802 down into the following tokens 804: "Non-red" and "2015."

In some implementations, because the token "Non-red" has no matching value in the "make and model" column of the vehicle table 810, the system deems the tokens 804 as having been incorrectly produced and a missing token failure as having occurred.

Once the natural language processing system detects this failure, the system prompts a user for input to resolve the failure. For example, the system may ask a user to provide a make and model of a vehicle to clarify the submitted natural language query 802 as shown in step 806. A user can respond by clarifying the natural language query 802 with additional context to produce a clarified natural language query, e.g., "How much is a blue color Cadillac ATS 2015?"

The system 800 may resume by processing the clarified query, e.g., using the natural language query 802 as a context. The system may produce the following tokens from the clarified query: "blue"; "Cadillac ATS"; and "2015" from the clarified query and generate SQL queries based on the new tokens.

Another type of failures that may occur when processing a natural language query are overly complex query failures. For example, a query that is semantically complicated is likely to have a large number of lexicon matches and dependency relationships, which can cause a failure when they exceed a system's ability to process.

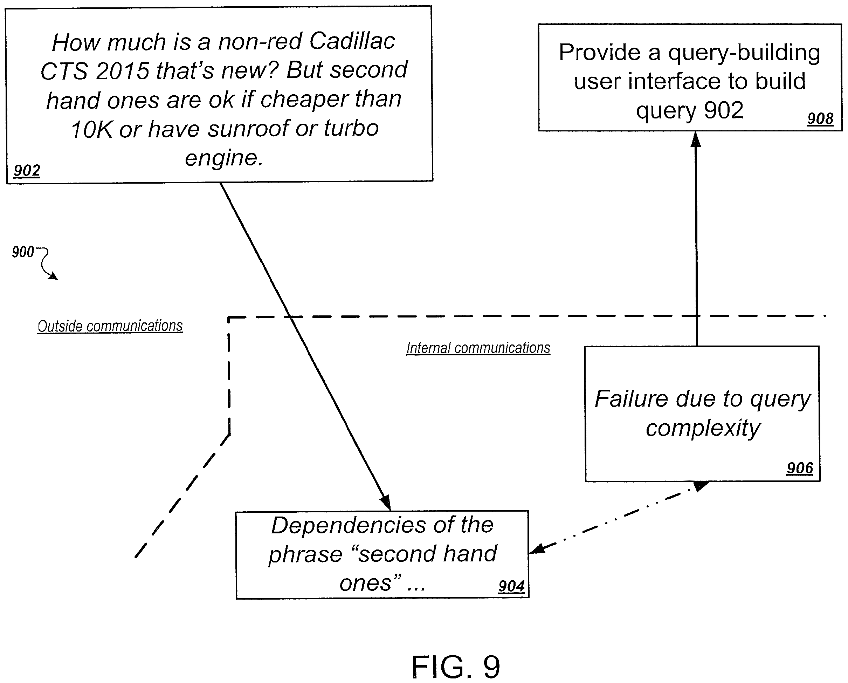

FIG. 9 is a block diagram illustrating an example process 900 for handling a lexicon matching or dependency failure through user interactions. For convenience, the process 900 will be described as being performed by a system of one or more computers, located in one or more locations, and programmed appropriately in accordance with this specification. For example, the system 200 of FIG. 2, appropriately programmed, can perform the process 900.

After receiving a user-provide natural language query 902, e.g., "How much is a non-red Cadillac CTS 2015 that's new? But second hand ones are ok if cheaper than 10K or have sunroof or turbo engine," a natural language processing system may attempt to resolve the dependencies of the phrase "second hand ones" when converting the natural language query 902 into one or more SQL queries.

Because resolving the dependencies 904 of the phrase "second hand ones" may produce a large number of possible outcomes, e.g., "second hand non-red Cadillac CTS 2015"; "second hand non-red Cadillac CTS"; "second hand non-red Cadillac 2015"; "second hand Cadillac CTS 2015"; "second hand Cadillac CTS"; "second hand Cadillac 2015"; "second hand Cadillac," which can exceed a specified maximum number of outcomes the system can handle for a single natural language query, the system may experience a lexicon matching failure or a dependency failure 906.

When a lexicon matching or dependency failure occurs, the system may provide a query building user interface, through which the user can either rewrite the original natural language query 902 or provide linguistic boundaries for the terms included in the original natural language query 902, to reduce query complexity. For example, the system may provide user interface (UI) controls, e.g., radio buttons and dropdown lists, as filters, so that a user may remove dependencies in the natural language query 902. For example, a user may apply a condition filter, e.g., with the value "second hand," in conjunction with a make and model filter, e.g., with the value "Cadillac CTS" and a year filter, e.g., with the value "2015," to clarify that the term "second hand" refers to a "Cadillac CTS 2015."

Once a user applies appropriate filters, the system may process a new query based on the filter values.

A third type of failures that may occur when processing a natural language query are data access failures. For example, when a user queries against a data source to which the user lacks access, a data access failure occurs.

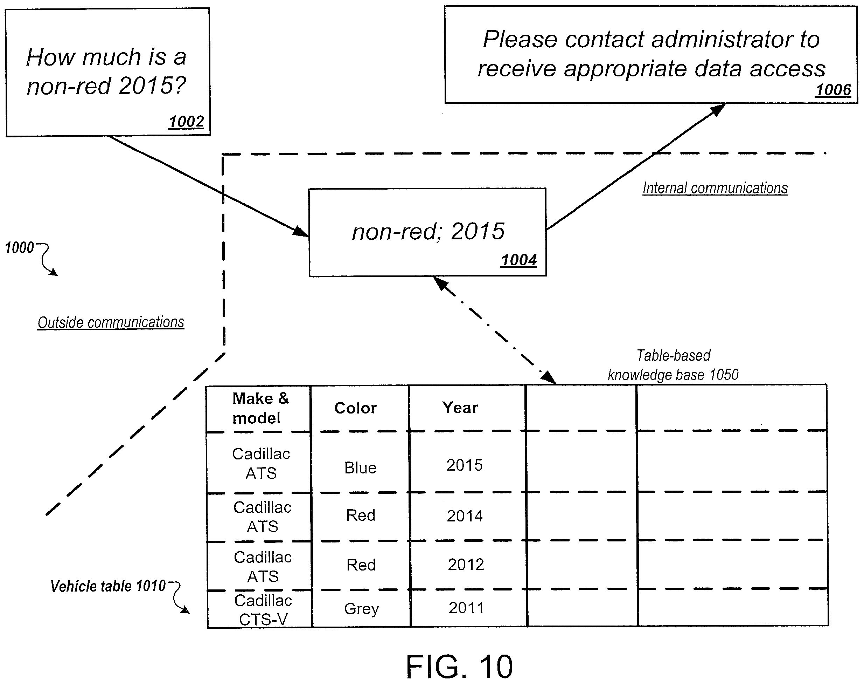

FIG. 10 is a block diagram illustrating an example process 1000 for handling a data access failure through user interactions. For convenience, the process 1000 will be described as being performed by a system of one or more computers, located in one or more locations, and programmed appropriately in accordance with this specification. For example, the system 200 of FIG. 2, appropriately programmed, can perform the process 1000.

After receiving a natural language query 1002, e.g., "How much is a non-red Cadillac CTS 2015?," a natural language process system may determine, at step 1004, that processing the natural language query 1002 requires read access to a vehicle table 1010. However, the system may determine that the user has not been granted read access to the vehicle table 1002, e.g., based on permissions specified in the user's profile.

When detecting that appropriate data access permission is lacking, the system can experience a data access failure 1004. In some implementation, the system provides a suggestion as to how to resolve the failure. For example, the system may suggest the user to contact a database administrator to receive appropriate data access and then rerun the query. The user can then follow the suggestions to resolve the failure so that the processing can proceed.

Note that when providing a suggestion to a user, the system avoids providing information that can potentially reveal data to which the user lacks access. For example, the system can refrain from revealing to the user the name of the data table, e.g., the vehicle table 1010, or the data columns, e.g., the "color" and "make & model" columns, to which the user lacks read access. Instead, the system may provide only generic instructions directing a user to resolve a data access failure, e.g., suggesting that the user should contact a database administrator.

A fourth type of failures that may occur when processing a natural language query are linguistic ambiguity failures. For example, when a natural language query includes ambiguities that can lead to multiple different interpretations of the query terms, a linguistic ambiguity failure occurs.

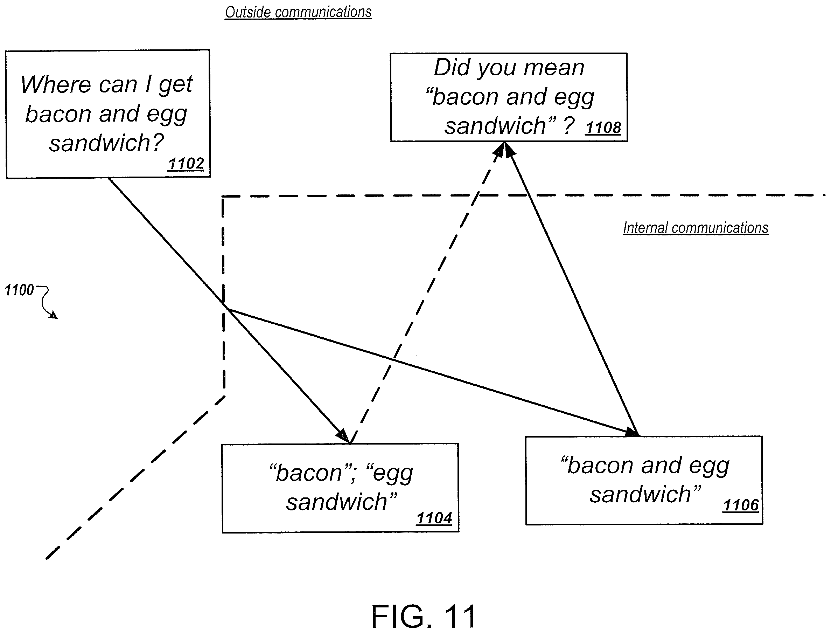

FIG. 11 is a block diagram illustrating an example process 1100 for handling a linguistic ambiguity failure through user interactions. For convenience, the process 1100 will be described as being performed by a system of one or more computers, located in one or more locations, and programmed appropriately in accordance with this specification. For example, the system 200 of FIG. 2, appropriately programmed, can perform the process 1100.

After receiving a user-provide natural language query 1102, e.g., "Where can I get bacon and egg sandwich?," a natural language process system may, as shown in step 1104, interpret the natural language query 1102 as two separate queries of "Where can I get bacon?" and "Where can I get egg sandwich?"

Alternatively, the system may also interpret, as shown in step 1106, the natural language query 1102 as a single query of "Where can I get a sandwich that includes both bacon and egg?"

Sometimes, e.g., due to a lack of further context, the system deems both alternatives equally possible or even plausible. When facing two competing plausible interpretations, the system can experience a linguistic ambiguity failure. To resolve this failure, the system prompts a user to clarify the natural language query 1102 to remove ambiguity. For example, the system may prompt a user to clarify whether she meant to search for where to get "a bacon and egg sandwich," as shown in step 1108.

Once a user clarifies the natural language query 1102, removing one or more ambiguities, the system can proceed to process the clarified query and produce matching results.

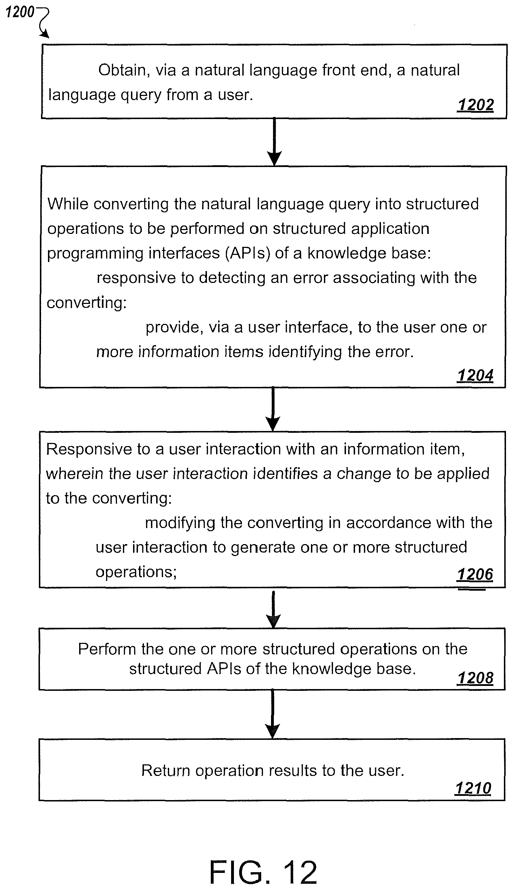

FIG. 12 is a flow diagram illustrating an example process 1200 for handling failures in processing natural language queries through user interactions. For convenience, the process 1200 will be described as being performed by a system of one or more computers, located in one or more locations, and programmed appropriately in accordance with this specification. For example, the system 200 of FIG. 2, appropriately programmed, can perform the process 1200.

The process 1200 begins with the system obtaining (1202) a natural language query from a user through a natural language frontend.

After obtaining the query, the system attempts to convert the query into structured operations to be performed on structured application programming interfaces (APIs) of a knowledge base. For example, the system may parse a plain English query to produce several tokens and maps the produced token to a data table's scheme in order to generate a SQL query.

Failures, e.g., those described in this specification, may occur when the system attempts to convert the natural language query into one or more structured operations. When the system detects a failure, the system provides (1204), through a user interaction interface, information to the user describing the failure, e.g., to prompt the user to help resolve the failure. For example, when a linguistic ambiguity failure occurs, the system may provide the user a choice of interpreting a natural language query in a certain way, to resolve ambiguity.

In response to receiving a user's input regarding the failure, the system modifies (1206) the conversion process based on the user's input. In some implementations, the system modifies the conversion process by abandoning the original query and processing a new query. In some other implementations, the system modifies the conversion process by continuing to process the original query in view of the user's input, e.g., context.

For example, having received a user selection of how an ambiguity should be resolved, e.g., "a bacon and egg sandwich" rather than "bacon" and "egg sandwich," the system may generate SQL queries accordingly.

The system then continues the process 1200 by performing (1208) the one or more structured operations, e.g., SQL queries, on the structured APIs of the knowledge base. Once operation results, e.g., matching query results, are produced, the system provides (1210) them to the user.

In some implementations, a user enters a natural language query through a user interface. The natural language query processing system parses the query to generate a document tree and performs a phrase dependency analysis to generate dependencies between constituents. The system then performs a lexical resolution, which includes an n-gram matching followed by generation of concepts for the matched n-grams. The system forms a concept tree is formed based on the generated concepts and the dependencies between the concepts.

The system may also transforms the concept tree by modifying relationship between the concepts in the tree. The next stage is virtual query generation and it starts with the hypergraph analysis step path resolution is performed. The system iterates through all the nodes (concepts) to generate the building blocks for the output query and use the hypergraph to generate all the joins (if any). The structured query can be processed to generate the actual SQL query.

A failure can happen in any of these stages and a natural language query processing system may catch and propagate the failure to a user for resolution or may record the issue to investigate as a bug. To resolve a failure through error propagation, the system keeps track of the context and provide reasonable amount of information so that an action could be taken. In general, the action could be taken at any stage that we have gone through earlier (e.g., requesting the parser for an alternate parse) or could be propagated all the way up to the user (e.g., requesting a user to clarify the binding of a constant value).

### Generation of alternative parses

As described above with respect to FIG. 3, iterating over query versions can include determining alternative parses for a given original natural language query. In some implementations, the parse result of the original query is examined. If the original query does not have any verbs or if the punctuation at the end of the query is not consistent with the parse output, the system can make one or more minor changes to the query to make it closer to a properly formed sentence or question.

For example, the original query can be "Revenue in France yesterday per sales channel?" This query is actually a noun phrase with a question mark at the end. The system may be able to get a better parse if it changes the original query to a proper question, for example, "What is revenue in France yesterday per sales channel?" which parses as a proper question. The system may get a better parse by adding a verb to the original query, for example, "Show me revenue in France yesterday per sales channel" which parses as a proper sentence.

In another example, the original query input by the user can be "sales per buyer name where buyer's personal address is in California, and the seller's business address is in Nevada?" This query parses as a sentence but with a quotation mark at the end. The parse loses some dependencies and results in errors being triggered during the parse analysis. However, the following changed queries correctly parse:

"What is sales per buyer name where buyer's personal address is in California, and the seller's business address is in Nevada?" which parses as a proper question.

"sales per buyer name where buyer's personal address is in California, and the seller's business address is in Nevada" drops the question mark and parses as a proper fragment.

For completeness, the resulting structured query can be:

```
 SELECT
        buyer_buyer_seller.Person.full_name,
        SUM(buyer_seller.BuyerSeller.sales_usd) AS
 alias0_sales_usd
 FROM buyer_seller.BuyerSeller.all AS buyer_seller.BuyerSeller
 INNER JOIN buyer_seller.Person AS seller_buyer_seller.Person
        ON (buyer_seller.BuyerSeller.seller_id =
        seller_buyer_seller.Person.person_id)
 INNER JOIN buyer_seller.Person AS buyer_buyer_seller.Person
        ON (buyer_seller.BuyerSeller.buyer_id =
        buyer_buyer_seller.Person.person_id)
 INNER JOIN buyer_seller.Address AS
 seller_business_address_buyer_seller.Address
        ON (seller_buyer_seller.Person.business_address_id =
        seller_business_address_buyer_seller.Address.address_id)
 INNER JOIN buyer_seller.Address AS
 buyer_personal_address_buyer_seller.Address
        ON (buyer_buyer_seller.Person.personal_address_id =
        buyer_personal_address_buyer_seller.Address.address_id)
 WHERE buyer_personal_address_buyer_seller.Address.state = 'CA'
        AND seller_business_address_buyer_seller.Address.state =
 'NV'
 GROUP BY 1;
```

In some other implementations, the original input query can lack proper punctuation and/or be interpretable in multiple ways. The initial parse result for such queries may not result in a successful analysis. The system's attempt to try alternate parses based on basic modifications as discussed above may also fail to produce a successful analysis. The system can generate alternative parses by using other techniques, e.g., external to the parser, to augment the input query with some token range constraints before sending the query to the parse. These constraints are processed by the parser as a unit and often result in an alternative version that can be interpreted correctly, e.g., with a successful analysis or a high quality score. There are different techniques that can be used to generate the alternative queries based on particular grammars.

An example original query is "sales and average likes of buyer where seller has more than 100 likes." The basic changes for generating alternative versions as describe above do not result in a successful parse. An example of a generated alternative query with token range constraints is "{sales and average likes of buyer} where {seller has more than 100 likes}" which results in a successful parse. The constraints are marked by the use of curly parenthesis {}. The system may generate multiple versions and use a ranking mechanism to feed those into the analysis based on their rank.

For completeness, the resulting structured query can be:

```
 SELECT
        AVG(buyer_buyer_seller.Person.likes) AS
 alias0_buyer_buyer_seller.Person.likes,
        SUM(buyer_seller.BuyerSeller.sales_usd) AS
 alias1_sales_usd
 FROM buyer_seller.BuyerSeller.all AS buyer_seller.BuyerSeller
 INNER JOIN buyer_seller.Person AS seller_buyer_seller.Person
        ON (buyer_seller.BuyerSeller.seller_id
 =seller_buyer_seller.Person.person_id)
 INNER JOIN buyer_seller.Person AS buyer_buyer_seller.Person
        ON (buyer_seller.BuyerSeller.buyer_id =
 buyer_buyer_seller.Person.person_id)
 WHERE seller_buyer_seller.Person.likes > 100;
```

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interaction interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method comprising:
obtaining, through a natural language front end, a natural language query from a user;
converting the natural language query into structured operations to be performed on structured application programming interfaces (APIs) of a knowledge base, comprising:
parsing the natural language query,
analyzing the parsed query to determine dependencies,
performing lexical resolution,
forming a concept tree based on the dependencies and lexical resolution;
analyzing the concept tree to generate a hypergraph,
generate virtual query based on the hypergraph, and
processing the virtual query to generate one or more structured operations;
performing the one or more structured operations on the structured APIs of the knowledge base; and
returning search results matching the natural language query to the user.

2. The method of claim 1, wherein parsing the natural language query includes breaking the natural language query into phrases and placing the phrases in a parsing tree as nodes.

3. The method of claim 2, wherein performing lexical resolution comprises generating concepts for one or more of the parsed phrases.

4. The method of claim 1, wherein analyzing the concept tree comprises:
analyzing concepts and parent-child or sibling relationships in the concept tree; and
transforming the concept tree including annotating concepts with new information, moving concepts, deleting concepts, or merging concepts with other concepts.

5. The method of claim 1, wherein the hypergraph represents a database schema where data tables may have multiple join mappings among themselves.

6. The method of claim 1, comprising analyzing the hypergraph including performing path resolution for joins using the concept tree.

7. The method of claim 1, comprising detecting a failure during conversion of the natural language query to the one or more structured operations.

8. The method of claim 7, comprising resolving the failure through additional processing including determining if an alternative parse for the natural language query is available.

9. The method of claim 7, comprising resolving the failure through additional processing including:
providing, through a user interaction interface, to the user one or more information items identifying the failure;
responsive to a user interaction with an information item: and
modifying the natural language query in accordance with the user interaction to generate one or more structured operations.

10. The method of claim 7, wherein the failure can be based on one or more of a bad parse, an ambiguous column reference, an ambiguous constant, an ambiguous datetime, unused comparison keywords or negation keywords, aggregation errors, a missing join step, an unprocessed concept, an unmatched noun phrase, or missing data access.

11. The method of claim 1, wherein the knowledge base, the natural language front end, and the user interaction interface are implemented on one or more computers and one or more storage devices storing instructions, and wherein the knowledge base stores information associated with entities according to a data schema and has the APIs for programs to query the knowledge base.

12. A computing system comprising:
one or more computers; and
one or more storage units storing instructions that when executed by the one or more computers cause the computing system to perfonn operations to implement the method steps as claimed in any one of claims 1 to 11.

13. A computer storage medium encoded with a computer program, the computer program comprising instructions that when executed by a system cause the system to perform operations to implement the method steps as claimed in any one of claims 1 to 11.
